# EUROPEAN PATENT SPECIFICATION

(11) **EP 3 786 069 B1**
(45) Date of publication and mention of the grant of the patent: **25.01.2023**
(21) Application number: 20192330.7
(22) Date of filing: 24.08.2020
(51) Int. Cl.: B64D 39/02

(54) **HOSE INSPECTION SYSTEM**
SCHLAUCHPRÜFSYSTEM
SYSTÈME D'INSPECTION DE TUYAU

(30) Priority: 30.08.2019 GB 201912521
(43) Date of publication of application: 03.03.2021
(73) Proprietor: Mission Systems Wimborne Limited, Wimborne Dorset BH21 2BJ (GB)
(72) Inventor: PATTISON, James Edward, Wimborne, Dorset BH21 2BJ (GB); CLARKE, Henry, Wimborne, Dorset BH21 2BJ (GB)
(74) Representative: CSY London

(56) References cited:
- EP-A1- 3 715 815
- US-A1- 2011 052 039
- US-A1- 2013 028 377
- US-A1- 2018 057 021
- US-A1- 2019 057 528

## Description

This invention relates to hose inspection, in particular a system and method for inspecting the condition of a hose used for in-flight refuelling, while the hose is being used in flight.

Aerial refuelling is a method of extending the operating range of an aircraft without an aircraft having to land. Many different types of aircraft are capable of being refuelled in-flight including fixed wing aircraft, rotary wing aircraft and unmanned aerial vehicles. There are two main forms of aerial refuelling currently used. One of these uses a fixed boom, which is mounted to the underside of the tanker aircraft, i.e. the aircraft doing the refuelling. The other main type uses a trailing flexible hose which is deployed from the tanker aircraft. The hose is fitted with a drogue to stabilise the hose and provide an easier target for guiding a fixed probe, located on a receiver aircraft (i.e. the aircraft to be refuelled) into the engagement with the end of the hose. The drogue is typically a cone-shaped stabilisation device attached to a coupling that provides a means to connect to the hose, as well as the necessary mechanisms for latching the probe on the receiver aircraft to the hose and for controlling and managing fuel transfer.

Under normal flight conditions, the tanker aircraft, retains the hose inside the main body of the aircraft or within a pod or similar structure usually attached to a wing. When the tanker aircraft is ready to begin refuelling operations, the hose is deployed and extends away from the tanker aircraft. As the hose is extended from the tanker aircraft, it is dragged along in the air flow and trails behind the tanker aircraft. The drogue provided at the end of the hose helps to stabilise the hose so that it maintains a relatively stable path through the air. This allows the receiver aircraft to move into position so that the probe mounted on its fuselage can be entered into engagement with the hose to allow transfer of fuel.

The hose is typically deployed from a reel held internally of the tanker aircraft and deployed through an aperture. The process of deploying the hose to its extended state and retracting it, as well as engagement with the receiver aircraft leads to wear and tear on the hose itself, as well as the other parts of the hose assembly. It is clearly important to maintain the fuel carrying hose in good condition and so regular inspection of the hose is required to ensure that any damage to the hose is detected and appropriate remedial action taken.

Inspection of the hose is typically carried out as a post flight operation. On the ground, since the hose is retracted into the body of the aircraft or a pod mounted on the aircraft, it is not easy to properly inspect the hose without unwinding it. This requires manual extension of the hose from the aircraft onto the ground so a careful inspection of the entire length of the hose can be conducted. The hose must then be retracted back into the aircraft. This process clearly imposes additional limitations on the operation of the aircraft as it is necessary to take the aircraft out of service whilst the inspection is taking place. It also requires considerable manpower to deal with extending the hose, carrying out the inspection and then retracting the hose back into the aircraft. Furthermore, the process of removing the hose and laying it on the ground, manipulating it for inspection and then retracting it back into the aircraft can, in itself, lead to damage to the hose, particularly the outer surface. This damage is in addition to any damage or wear whilst it is being used for refuelling and so can potentially shorten the usable life of the hose and the drogue.

It would therefore be advantageous to avoid this ground-based manual inspection process. The present invention aims to provide a solution to this problem.

US2013/028377 describes a system for monitoring degradation of a device, such as a vehicle boom arm, having a metal layer covered by a composite layer. The system can include a collar mounted onto the device to allow radiography signals to be passed therethrough. Document US2019057528 discloses an aerial refuelling system comprising a hose deployment system for deploying and retracting a hose, and a hose monitoring system having an observation system including one or more sensing devices.

Therefore, according to the present invention, there is provided an aerial refuelling system having comprising: a hose deployment system for deploying and retracting a hose in and out of an aircraft; a the hose monitoring system having: an observation system including one or more sensing devices mountable on the aircraft and arranged to observe the hose as it moves relative to the sensing devices as it as it is deployed and retracted from or retracted into the aircraft; and storage means for storing the data provided from the one or more sensing devices so that the stored data can be retrieved later for assessing deterioration in the condition of the hose.

The provision of sensing devices with the hose deployment system allows the hose to be viewed and monitored during use when the aircraft is airborne. Images can be collected and analysed contemporaneously or retrospectively to assess the condition of the hose and if there is any deterioration in the condition that might require remedial action or further inspection. This avoids the need to deploy the hose when the aircraft is on the ground, significantly reducing servicing time, manpower to carry out servicing and also avoiding potential damage and wear and tear on the hose due to deploying it and laying it out on the ground.

The observation system preferably includes a plurality of sensing devices radially distributed around the hose for observing the hose from different directions. This allows a complete view of the circumference of the hose to be obtained to make sure the entire hose can be observed.

Each of the sensing devices is preferably one of the following types: an infra-red camera; an ultraviolet camera; a visible light camera; or a hyperspectral camera. Other sensors using different spectrums may be used such as radar and x-ray band. Using different viewing spectrums, allows different analysis of the surface and subsurface of the hose to better assess the condition and changes in condition of the hose. Suitable illumination at the appropriate spectrum may be used but passive inspection such as looking at thermal infra-red may be used. A 3D laser profile sensor system may be used to determine a cross section profile of the hose and/or a surface profile of the hose.

The observation system may include one or more pairs of sensing devices which are different types. The pair of sensing devices can be arranged to observe the same portion of the hose. This allows different spectral images of the hose to be obtained for the same part of the hose. The different sensing devices of the pair may inspect the hose contemporaneously or at different times, such as one during deployment and one during retraction.

The hose monitoring system may include a signal processor arranged to combine data provided from each of said pair of sensing devices to produce hybrid data. The hybrid data can be used to obtain a better image of the hose to allow more reliable determination of issues.

The hose monitoring system includes storage means for storing the data provided from the one or more sensing devices. The stored data can be retrieved later for assessing the hose, either using an automated system or an expert human inspector. This may be done on the ground after landing or in the aircraft.

The hose deployment system may comprise a hose storage device for storing the hose when not deployed and a hose server having an aperture through which the hose passes, the hose server arranged to translate generally laterally relative to the axis of the hose to direct the hose as it is received by the hose storage device. The one of more of said one or more sensing devices can then be mounted onto the hose server.

This allows the cameras to be aligned and positioned close to the hose as it passes in and out of the system. This helps to provide a uniform view of the hose even though the hose may be moving around outside the aircraft and as it is stowed on board the aircraft.

Typically the hose passes from the hose deployment system out of the aircraft via a channel extending to the outer surface of the aircraft. One of more of said one or more sensing devices may be mounted in this channel. This allows the cameras to be out of the way of the hose storage mechanism, for example allowing for simpler installation of the cameras.

One of more of said one or more sensing devices may be mounted to another part of the aircraft to observe the hose as it passes between the hose deployment system and the exterior of the aircraft. This option may be convenient where mounting the cameras in other places is not convenient. There will be a number of locations along the path of the hose as it enters the aircraft and before it is received into the storage system where it may not be easy to observe the entire circumference of the hose.

Ideally, the sensing devices should face the hose at an angle perpendicular to the longitudinal axis of the hose, but they may be offset if locating them would be problematic.

The hose monitoring system optionally includes an image processor for analysing the data received from the sensing devices to identify changes in the condition of the hose. The processor may be integrated into the system which may allow contemporaneous analysis for the hose. Alternatively, analysis may be carried out subsequently or may even be carried out using stored data obtained from the system.

The image processor may compare data received from the sensing devices with historical data from the sensing devices to identify changes in the condition of the hose. By comparing data with historical data, changes can be identified by matching equivalent sections of the hose and assessing any changes due to damage or deterioration. As each section of the hose may not pass the same sensing device every time, the images may be combined into a composite image of the hose using data from multiple sensing devices and then the composite images compared.

By monitoring the condition of the hose whilst the aircraft is in flight, the need to carry out ground inspections is reduced or avoided completely. This helps to reduce the amount of manpower needed to carry out the inspection, reduces the amount of time the aircraft is potentially out of service, and reduces the potential for damage occurring to the hose whilst it is being deployed and inspected on the ground.

The present invention also provides a method for monitoring a hose in an aerial refuelling system comprising: deploying and retracting a hose in and out of an aircraft; observing the hose using one or more sensing devices mountable on the aircraft and arranged to observe the hose as it moves relative to the sensing devices as it is deployed from or retracted into the aircraft; and storing the data provided from the one or more sensing devices in a storage means so that the stored data can be retrieved later for assessing deterioration in the condition of the hose.

The observing step preferably includes observing the hose from different directions using a plurality of sensing devices radially distributed around the hose.

The observing step preferably includes using one or more pairs of sensing devices which are different types, where each of the pair of sensing devices is arranged to observe the same portion of the hose.

The data provided from each of said pair of sensing devices can be combined to produce hybrid data.

The data provided from the one or more sensing devices can be stored in a storage means to allow for the data to be analysed later, for example by removing the data storage device from the aircraft.

The hose may be deployed from a hose deployment system out of the aircraft via a channel extending to the outer surface of the aircraft, and wherein one of more of said one or more sensing devices may be mounted in such a channel.

The method may include analysing the data received from the sensing devices to identify changes in the condition of the hose. Such analysing can compare data received from the sensing devices with historical data from the sensing devices to identify changes in the condition of the hose.

The present invention will now be described in more detail with reference to the following drawings, in which:
Figure 1 shows a side view of a typical aerial refuelling pod arrangement;
Figure 2 shows a schematic vertical cross-section through a pod;
Figure 3 shows a schematic overhead view of the interior of the pod;
Figure 4 shows a partial cutaway view of the interior of the pod;
Figure 5 shows a view of the serving carriage for the present invention;
Figure 6 shows an alternative form of serving carriage for the present invention;
Figure 7 shows a cutaway perspective view of an alternative embodiment of the present invention; and
Figure 8 shows a cutaway perspective view of a further embodiment of the present invention.

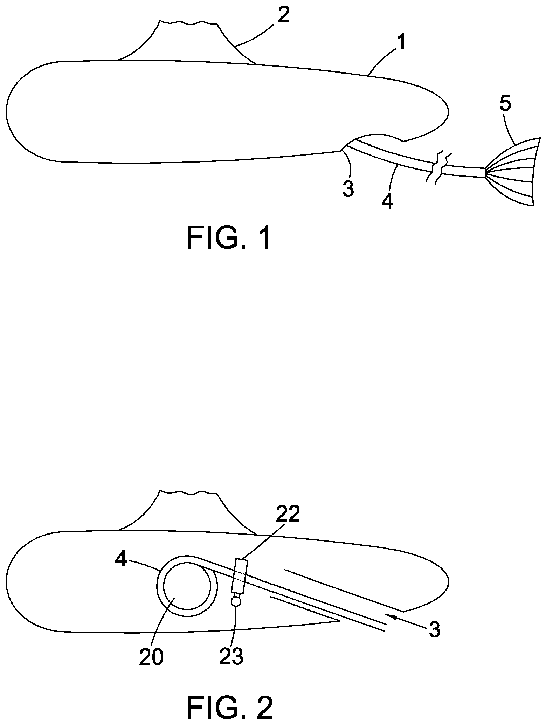

Figure 1 shows a typical pod that might be used for carrying an aerial refuelling system. The pod 1 is typically mounted to the wing of a tanker aircraft (not shown) by hanging it from the wing using a pylon 2. References herein to the arrangement being mounted in a pod apply equally to the arrangement being mounted in other parts of the aircraft, including the main body and the invention should not be construed as being limited to use in a pod. The pod 1 provides a container for the elements of the refuelling systems, such as a reel for storing the hose when retracted, fuel supply and control equipment, equipment for deployment of the hose etc. The pod 1 is provided with an aperture 3 through which the hose 4 can pass and into which the drogue 5 can be received when the hose is stowed.

In a typical configuration, the hose 4 will be held within the pod 1 with the drogue 5 drawn into the aperture to remove it from the air flow around the pod and aircraft, when refuelling operations are not being carried out. When refuelling is carried out, the hose is deployed from the pod with the drogue 5 stabilising the end of the hose for engagement with the receiver aircraft. Figure 1 shows the system in the deployed state with the hose extending out of the pod 1.

Figure 2 shows a vertical cross-section through the pod, showing the relevant elements of the refuelling system. Figure 2 does not show all the elements required for a complete refuelling system. The hose drum 20 acts as a storage mechanism for the hose when it is retracted. The hose is wound onto the drum in a spiral manner when the hose is partially or completely withdrawn.

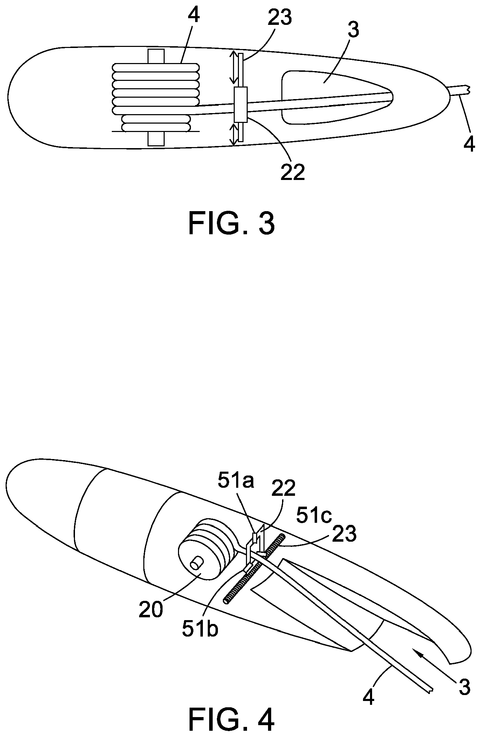

Figure 3 shows an overhead view of the main internal components of the pod, which shows the hose drum 20 more clearly. Again, Figure 3 does not show all the elements contained within the pod 1.

As the hose 4 is deployed, it begins to unwind from the hose drum 20. As it unwinds, the relative position where the hose leaves the hose drum will change. This will cause the hose to pass away from the drum at differing positions as the hose is unwound. To guide the hose from the reel into the aperture 3 and out of the rear of the pod 1, a serving carriage 22 is provided. The hose is passed through an aperture 50,60 in the serving carriage 22. The serving carriage is particularly important when the hose is being retracted back into the pod. In order to ensure that the hose is wound reliably onto the hose drum 20, the serving carriage is mounted on a carriage bearer 23 which horizontally translates the serving carriage from one side of the pod to another, in order to direct the hose into the correct position the hose drum. This ensures that the hose is wound onto the hose drum in a well-defined and reliable way, such that it can be easily deployed in future, without the risk of snagging or jamming of the hose on the drum. The hose will typically be wound in a spiral form onto the drum possibly with several layers. The progressive translation of the carriage lays the hose down neatly onto the drum or previous layers of hose as the drum rotates and the hose is would in.

In this embodiment, the carriage bearer 23 is a screw drive having a shaft with a helical thread provided on it. The threaded shaft of the carriage bearer passes through a corresponding threaded bore which is attached to the serving carriage. As the shaft rotates, the serving carriage can be translated from one side of the pod to the other to direct the hose into the correct position on the hose drum.

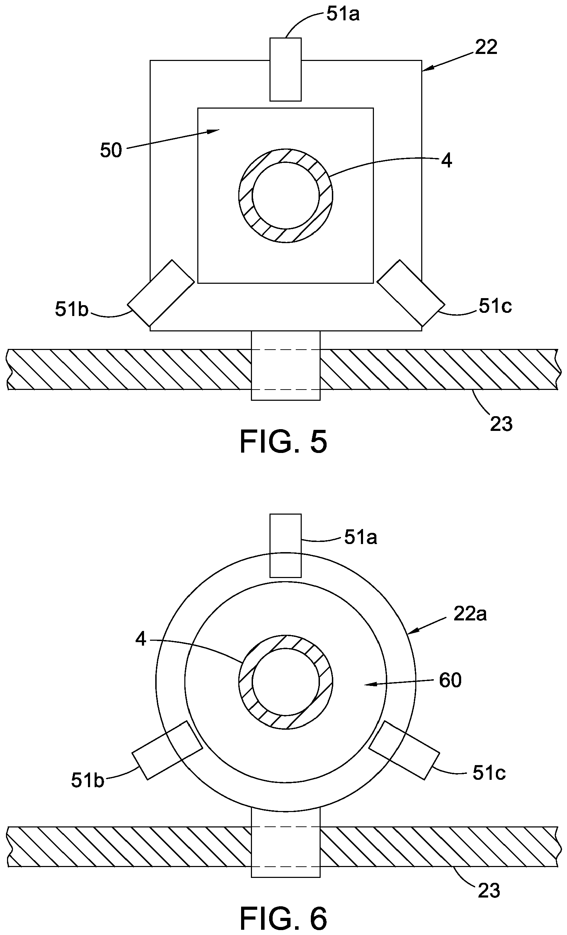

The dimensions of the aperture 50 passing through the serving carriage 22 are arranged to relatively closely match that of the hose so that the lateral position of the hose can be controlled by positioning of the serving carriage. Consequently, the position of the hose relative to the serving carriage is relatively uniform as the hose is deployed and retracted back onto the hose drum. Figure 5 shows the orientation of the hose passing through the aperture 50 and the serving carriage 22.

During a normal aerial refuelling operation, a substantial proportion of the hose will be unwound from the hose drum 20 and will pass through the serving carriage 22. Three cameras are mounted on the serving carriage and directed towards the centre of the aperture, or more preferably the centre of the hose passing through the aperture, so that the cameras can observe the hose as it passes through the aperture 50. The cameras 51a,51b,51c are mounted to the serving carriage so that as the serving carriage translates it maintains the cameras in a comparatively constant relationship to the hose as it passes through the aperture 50.

In the arrangement shown in Figure 5, the cameras are arranged around the hose and spaced at approximately 120° angles to provide a view of the entire circumference of the portion of the hose passing by the cameras. It will be understood that the cameras may be arranged at different angles and orientations to provide a suitable perspective for viewing the outer circumference of the hose. Furthermore, although the embodiment includes three cameras, additional cameras may be provided to provide a more detailed view of the hose from different angles. Equally, it is not essential to have three cameras and a pair of cameras may be used to view the hose although the view of the hoses may be somewhat restricted. In a further alternative, the arrangement may include only a single camera and be provided with a set of mirrors to reflect the view from the other sides of the hose. For example, in the arrangement shown in Figure 5, the cameras 51b and 51c could be replaced with mirrors such that the view observed by the camera 51a includes the lower portion of the hose and the views of the rear part of the hose via the mirrors which replace cameras 51b,51c. In this way a single camera may record views from differing angles.

The arrangement shown in Figure 5 includes a serving carriage with a generally square shape. However, the serving carriage and the aperture in it may have a different shape according to the operational requirements of the refuelling system. For example, the arrangement shown in Figure 6 has a circular serving carriage with a generally circular aperture 60. This arrangement also includes three cameras 51a,51b,51c similar to those shown in Figure 5. Again, these cameras are arranged at a roughly 120° spacing. In this arrangement, the number of cameras may be also varied, as suggested above.

In the above embodiments, the cameras are arranged to obtain a view of roughly one third of the outer circumference of the hose. The cameras are preferably set back from the axis of the hose in order to provide a sufficient field of view to encompass the full width of the hose. The cameras may therefore be set back from the edge of the apertures 50,60 or the apertures may include guides to hold the hose away from the edge of the aperture and therefore away from the cameras. The cameras will preferably be looking directly onto the hose perpendicular to the axis of the hose.

In this embodiment, the cameras used are standard optical type cameras such as a charge-coupled device which converts the received light into an image signal. Alternatively, the camera may be a CMOS (Complementary Metal Oxide Semiconductor) type sensor. However, other types of sensors may be used such as infrared cameras. These could be passive infrared (PIR) sensors which detect the infrared light which is emitted from or reflected off the surface of the hose. It may also include thermal infrared, short wave, medium wave and long wave infrared etc. Other types of cameras or sensors may be used such as a hyperspectral imaging sensor. A hyperspectral imaging sensor collects images from across a range of electromagnetic frequencies, with each image collected representing the view using a narrow band from the scanning spectrum. This allows the hose to be scanned with a broader range of electromagnetic frequencies typically extending well beyond the normal visible spectrum observed by a conventional video camera.

Different types of camera may be used in combination or selectively used to obtain views from different spectrums at different times. For example, a CCD type sensor may be used to observe visible light and a passive infrared sensor or other infrared type sensor may be used to observe emissions in the infrared spectrum. The cameras may be duplicated to obtain contemporaneous images as the hose passes by the cameras to allow comparison of the surface of the hose in different electromagnetic frequencies. Alternatively, the hose may be viewed using visible light on one occasion and then using infrared light on a different occasion, for example, in deploying the hose and when retracting the hose or on separate cycles. This may be more convenient as simultaneous recording may require illumination by either visible or infrared light which may interfere with respective cameras.

Other types of sensor may also be used. For example, an ultrasonic sensor may be used to observe the hose. Alternatively, an x-ray sensor may be used, to provide views of the exterior of the hose but may additionally provide a more detailed inspection of the internal structure of the hose as well as the surface. Other techniques could include other electromagnetic frequencies such as ultraviolet or radar. Other sensors may be used such as those for monitoring eddy currents induced in the hose which may be used to observe the structure of the hose.

As a further alternative, a 3D laser profile sensor system may be employed. This would use one or more lasers for illumination and one or more sensors or a sensor matrix for detecting reflected laser light. The laser(s) will illuminate the hose surface and the intensity and distance of travel of the laser light will be measured by the sensor(s). The system will then convert this data into a cross-section profile of the hose and/or a surface profile of the hose in order to identify areas of interest. The chosen laser profile sensor system can be pre-calibrated to take data at set intervals which will allow the entire hose surface to be captured at the given maximum speed.

In one embodiment, the image or sensor data obtained from the cameras or sensors is recorded so that the images can be reviewed when the aircraft has returned to land. The images may be recorded on a simple recording device such as a memory card or other electronic storage device, which may be recovered from the pod after the aircraft has landed. This allows the service engineer to observe and review the condition of the hose along its length without having to remove the hose from the pod whilst it is on the ground. This means that the servicing aspect simply involves removing the stored data from the pod and can be reviewed at a later date, even if the aircraft has departed to carry out a further operation. It also avoids the risk of damaging the hose by deploying it and retracting it whilst it is on the ground, or taking the aircraft out of service during that process.

It should be understood that storing the image data on a memory card type device for removal by the service engineer is not essential, and the data may be stored in some other form of memory and may then be transferred by connecting to an external device such as a laptop or other storage device. The data may even be transmitted wirelessly from the storage in the pod.

Even where the refuelling system is mounted in the body of the aircraft itself, it may still be preferable and simpler to store the image data in the refuelling system as long as it can be accessed by the service operator.

Whilst from an installation and maintenance point of view, it may be simpler to retain the control and storage system for the cameras with the refuelling system, e.g. in the pod, the images may alternatively or additionally be transmitted by wire or wirelessly to a device within the main aircraft to which the refuelling system is mounted. This may allow the storage device to be more easily removed without having to access the controller within the pod or refuelling system. Furthermore, it could also be used to allow an operator in the aircraft to observe the hose in real time or at some other point during the flight, potentially avoiding the need for a service engineer to review the images after the plane has landed.

In the above arrangements, the images are observed by a trained service engineer who will use his experience and judgement to determine if the condition of the hose is significantly deteriorated requiring a repair or replacement. By obtaining videos of the hose over a period of time, the service engineer is provided with comparative references to be able to monitor the deterioration of the hose by comparing images of a portion of the hose from one recording with a previous recording. This process may be automated by using image recognition software to monitor the condition of the hose, by directly observing the current condition of the hose, or by comparing the hose condition to previous imagery to determine if there have been significant changes which might represent damage to the hose. Such an automated system may also be implemented as part of a ground service process using images obtained from the pod, but may be included in onboard systems or systems within the pod itself to automatically monitor the condition of the hose during each deployment and retraction and if damage is detected provide a warning to the air crew or service crew so that suitable remedial action can be taken.

The systems may similarly combine different imagery to provide a better observation of the condition of the hose for example by utilising different frequencies or possibly multiple views in the same frequency to provide a more three-dimensional view. The output from different sensors, such as optical and laser, may be aggregated to improve the representation of the cable and aid identifying anomalies.

In addition to the cameras, suitable illumination may be provided to aid the cameras in observing the hose. Therefore, if a camera using the visual spectrum is used, an illumination system in the visual spectrum may be used such as a simple light. However, for cameras using different spectrums, suitable illuminations such as infrared or ultraviolet may be used to provide suitable illumination for the cameras in use. By using the illumination provided, a relatively constant level of illumination is provided which provides for a more uniform observation of the hose, rather than relying on external lighting such as lighting from outside of the pod. Such light may be variable, particularly from day to night, but also as the aircraft encounters different environmental conditions such as cloud and weather which may affect the level of light significantly.

In the above embodiment, the cameras are mounted on the serving carriage which provides a convenient platform for the cameras and maintains the cameras in a relatively constant orientation relative to the hose. However, the serving carriage may not always be present in an aerial refuelling pod or other aerial refuelling system. Similarly, it may not be convenient to mount the cameras onto the serving carriage in all cases. However, whilst it is convenient to mount the cameras on the serving carriage, it is not essential and the cameras may be mounted in different portions in the pod so that they can still observe the hose as it passes in and out of the pod.

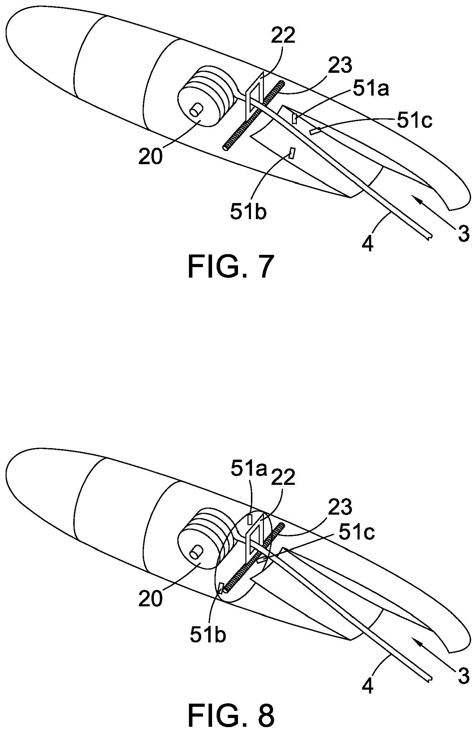

Figure 7 shows a modified embodiment in which the cameras are mounted in the aperture 3 of the pod. Figure 7 shows a perspective cut-away view of the pod, both showing an alternative position for the cameras in this embodiment. By mounting the cameras in the aperture, they will still obtain a good view of the hose as it passes in and out of the pod, in a similar manner to the embodiments above. As shown, three cameras are used, arranged at roughly 120° angles from each other around the hose. However, as with the previous embodiment, the cameras may be set out in slightly different angular orientations and different numbers of cameras may be used. As before, the cameras may be one of a number of different types of cameras or sensors such as those described above.

The cameras are preferably mounted to the surface of the aperture and may be recessed from the inner surface of the aperture so that they are set back from the hose as it passes through the aperture. The aperture 3 in the pod will typically be larger than the aperture 50 in the serving carriage of the previous embodiment and so the hose may have a larger range of movement within the aperture as it is being deployed and retracted and during operation, due to variations in the airflow around the aircraft causing the hose to move around. However, by arranging the cameras at suitable positions relative to the hose, they should still be able to observe the hose, or at least the portion of the hose that each camera is observing, to obtain a complete picture of the circumference of the hose. Additionally, guides may be provided to maintain the hose in a defined range of positions to ensure the hose remains in the cameras' field of view.

The modified embodiment of figure 7 is shown with a server carriage 22 but this is not essential to the invention and may not be present in other embodiments.

Figure 8 shows a further embodiment of the invention showing cameras 51a,51b,51c similar to those shown in Figure 5, 6 and 7 mounted radially around the path of the hose between the server carriage and the hose drum. This arrangement avoids having to mount the cameras on the server carriage which may require additional connections to the moving carriage for power, signalling etc. The cameras are mounted on a bulkhead but may be mounted on other elements of the system. They may also be mounted on stands to hold them closer to the path of the hose.

Again, these cameras are arranged at a roughly 120° spacing however they are mounted to the rear bulkhead of the pod, just aft of the hose drum. In this arrangement, the number of cameras may be also varied, as suggested above. The spacing would again typically be modified according to the number of cameras, e.g. four cameras might be spaced 90° apart.

Where the cameras are arranged in a position, where they cannot look directly towards the hose so that their view perpendicular to the hose axis, as suggested above, they may be directly to view the hose at an oblique angle. This can be useful to avoid the view of the hose being obscured by other elements such as the server carriage.

As will be apparent from the above embodiments, the precise position of the cameras is generally not critical to the operation of the invention and the cameras may be arranged in different positions to accommodate them in the structure, so as not to interfere with the movement of the server carriage, hose drum or the hose itself whilst being able to observe the hose as it passes through.

The embodiments above are described in relation to the refuelling system being provided in a pod. As noted above, refuelling systems may be integrated into the body or wing of the tanker aircraft and it is not intended that this invention should be limited to use in a pod. The structure of a refuelling system will typically be similar whether it is mounted in a pod, or within the aircraft body. An aperture similar to aperture 3 will typically be provided in the exit from the refuelling apparatus and a hose drum and serving carriage type arrangement will typically be used. However, again, it is not essential that the hose drum and serving carriage type arrangement be employed and as noted in the second embodiment above, the cameras may be mounted independently of them and simply observe the hose as it is moved in and out of the aircraft by whatever means.

## Claims

1. An aerial refuelling system comprising:
a hose deployment system (20, 22, 23) for deploying and retracting a hose (4) in and out of an aircraft;
a hose monitoring system having an observation system including one or more sensing devices (51a, 51b, 51c) mountable on the aircraft and arranged to observe the hose (4) as it moves relative to the sensing devices as it as it is deployed from or retracted into the aircraft; and
storage means for storing the data provided from the one or more sensing devices so that the stored data can be retrieved later for assessing deterioration in the condition of the hose.

2. An aerial refuelling system according to claim 1, wherein the observation system includes a plurality of sensing devices (51a, 51b, 51c) radially distributed around the hose for observing the hose from different directions.

3. An aerial refuelling system according to claim 1 or 2, wherein each sensing device (51a, 51b, 51c) is one of the following types: an infra-red camera; an ultraviolet camera; a visible light camera; a hyperspectral camera; or a 3D laser profile sensor system.

4. An aerial refuelling system according to claim 3, wherein the observation system includes one or more pairs of sensing devices (51a, 51b, 51c) which are different types, wherein each pair of sensing devices is arranged to observe the same portion of the hose.

5. An aerial refuelling system according to claim 4, further comprising a signal processor arranged to combine data provided from each of said pair of sensing devices (51a, 51b, 51c) to produce hybrid data.

6. An aerial refuelling system according to any preceding claim, wherein the hose deployment system further comprises a hose storage device (20) for storing the hose when not deployed and a hose server (22) having an aperture (50, 60) through which the hose passes, the hose server arranged to translate generally laterally relative to the axis of the hose to direct the hose (4) as it is received by the hose storage device (20), and wherein one of more of said one or more sensing devices (51a, 51b, 51c) are arranged to be mounted onto the hose server (22), in use.

7. An aerial refuelling system according to any preceding claim, wherein the hose passes from the hose deployment system out of the aircraft via a channel (3) extending to the outer surface of the aircraft, wherein
one of more of said one or more sensing devices (51a, 51b, 51c) are arranged to be mounted in said channel (3).

8. An aerial refuelling system according to any preceding claim, wherein one of more of said one or more sensing devices (51a, 51b, 51c) are arranged to be mounted to another part of the aircraft to observe the hose as it as it is deployed and retracted from the aircraft.

9. An aerial refuelling system according to any preceding claim, wherein the hose monitoring system includes a processor for analysing the data received from the sensing devices to identify changes in the condition of the hose.

10. An aerial refuelling system according to claim 9, wherein the processor compares data received from the sensing devices with historical data from the sensing devices to identify changes in the condition of the hose.

11. A method for monitoring a hose (4) in an aerial refuelling system comprising:
deploying and retracting a hose (4) in and out of an aircraft;
observing the hose using one or more sensing devices (51a, 51b, 51c) mountable on the aircraft and arranged to observe the hose as it moves relative to the sensing devices as it is deployed from or retracted into the aircraft; and
storing the data provided from the one or more sensing devices in a storage means so that the stored data can be retrieved later for assessing deterioration in the condition of the hose.

12. A method for monitoring a hose according to claim 11, wherein the observing includes observing the hose from different directions using a plurality of said sensing devices (51a, 51b, 51c) radially distributed around the hose (4).

## Patentansprüche

1. Luftbetankungssystem, das Folgendes umfasst:
ein Schlauchausfahrsystem (20, 22, 23) zum Ausfahren und Einziehen eines Schlauchs (4) in ein und aus einem Flugzeug;
ein Schlauchüberwachungssystem mit einem Beobachtungssystem, das eine oder mehrere Sensorvorrichtungen (51a, 51b, 51c) umfasst, die an den Flugzeug anbringbar und dazu angeordnet sind, den Schlauch (4) zu beobachten, wenn er sich relativ zu den Sensorvorrichtungen bewegt, wenn er aus dem Flugzeug ausgefahren oder darin eingezogen wird; und
Speichermittel zum Speichern der von der einen oder den mehreren Sensorvorrichtungen bereitgestellten Daten, sodass die gespeicherten Daten später zum Beurteilen der Verschlechterung des Zustands des Schlauchs ausgelesen werden können.

2. Luftbetankungssystem nach Anspruch 1, wobei das Beobachtungssystem eine Vielzahl von Sensorvorrichtungen (51a, 51b, 51c) umfasst, die radial um den Schlauch verteilt sind, um den Schlauch aus unterschiedlichen Richtungen zu beobachten.

3. Luftbetankungssystem nach Anspruch 1 oder 2, wobei es sich bei den Sensorvorrichtungen (51a, 51b, 51c) jeweils um eine der folgenden Arten handelt: eine Infrarotkamera, eine Ultraviolettkamera, eine Kamera für sichtbares Licht, eine Hyperspektralkamera oder ein 3D-Laserprofilsensorsystem.

4. Luftbetankungssystem nach Anspruch 3, wobei das Beobachtungssystem ein oder mehrere Paare Sensorvorrichtungen (51a, 51b, 51c) umfasst, bei denen es sich um unterschiedliche Typen handelt, wobei jedes Paar Sensorvorrichtungen dazu angeordnet ist, denselben Abschnitt des Schlauchs zu beobachten.

5. Luftbetankungssystem nach Anspruch 4, ferner umfassend einen Signalprozessor, der dazu angeordnet ist, von jedem des Paars Sensorvorrichtungen (51a, 51b, 51c) bereitgestellte Daten zusammenzuführen, um Hybriddaten zu erzeugen.

6. Luftbetankungssystem nach einem der vorangehenden Ansprüche, wobei das Schlauchausfahrsystem ferner eine Schlauchverstauvorrichtung (20) zum Verstauen des Schlauchs, wenn er nicht ausgefahren ist, und eine Schlauchführung (22) mit einer Öffnung (50, 60), durch die der Schlauch läuft, umfasst, wobei die Schlauchführung dazu angeordnet ist, sich allgemein seitlich relativ zu der Achse des Schlauchs translatorisch zu bewegen, um den Schlauch (4) zu lenken, wenn er von der Schlauchverstauvorrichtung (20) aufgenommen wird, und wobei eine oder mehrere der Sensorvorrichtungen (51a, 51b, 51c) dazu angeordnet sind, im Einsatz an der Schlauchführung (22) angebracht zu sein.

7. Luftbetankungssystem nach einem der vorangehenden Ansprüche, wobei der Schlauch durch einen sich zu der Außenoberfläche des Flugzeugs erstreckenden Schacht (3) von dem Schlauchausfahrsystem aus dem Flugzeug läuft, wobei eine oder mehrere der Sensorvorrichtungen (51a, 51b, 51c) dazu angeordnet sind, in dem Schacht (3) angebracht zu sein.

8. Luftbetankungssystem nach einem der vorangehenden Ansprüche, wobei eine oder mehrere der Sensorvorrichtungen (51a, 51b, 51c) dazu angeordnet sind, an einem anderen Teil des Flugzeugs angebracht zu sein, um den Schlauch zu beobachten, wenn er aus dem Flugzeug ausgefahren und eingezogen wird.

9. Luftbetankungssystem nach einem der vorangehenden Ansprüche, wobei das Schlauchüberwachungssystem einen Prozessor zum Analysieren der von den Sensorvorrichtungen empfangenen Daten umfasst, um Änderungen des Zustands des Schlauchs zu identifizieren.

10. Luftbetankungssystem nach Anspruch 9, wobei der Prozessor von den Sensorvorrichtungen her empfangene Daten mit historischen Daten von den Sensorvorrichtungen vergleicht, um Änderungen des Zustands des Schlauchs zu identifizieren.

11. Verfahren zum Überwachen eines Schlauchs (4) in einem Luftbetankungssystem, das Folgendes umfasst:
Ausfahren und Einziehen eines Schlauchs (4) in ein und aus einem Flugzeug;
Beobachten des Schlauchs unter Verwendung von einer oder mehreren Sensorvorrichtungen (51a, 51b, 51c), die an den Flugzeug anbringbar und dazu angeordnet sind, den Schlauch zu beobachten, wenn er sich relativ zu den Sensorvorrichtungen bewegt, wenn er aus dem Flugzeug ausgefahren oder darin eingezogen wird; und
Speichern der von der einen oder den mehreren Sensorvorrichtungen bereitgestellten Daten in einem Speichersystem, sodass die gespeicherten Daten später zum Beurteilen der Verschlechterung des Zustands des Schlauchs ausgelesen werden können.

12. Verfahren zum Überwachen eines Schlauchs nach Anspruch 11, wobei das Beobachten das Beobachten des Schlauchs aus unterschiedlichen Richtungen unter Verwendung einer radial um den Schlauch (4) verteilten Vielzahl der Sensorvorrichtungen (51a, 51b, 51c) umfasst.

## Revendications

1. Système de ravitaillement de carburant en vol comportant :
un système de déploiement de tuyau (20, 22, 23) servant à déployer et à rétracter un tuyau (4) dans et hors d'un aéronef ;
un système de surveillance de tuyau ayant un système d'observation comprenant un ou plusieurs dispositifs de détection (51a, 51b, 51c) en mesure d'être montés sur l'aéronef et agencés pour observer le tuyau (4) alors qu'il se déplace par rapport aux dispositifs de détection alors qu'il est déployé en provenance de, ou rétracté jusque dans, l'aéronef ; et
un moyen de stockage servant à stocker les données fournies en provenance desdits un ou plusieurs dispositifs de détection de telle sorte que les données stockées peuvent être récupérées plus tard à des fins d'évaluation de la détérioration concernant l'état du tuyau.

2. Système de ravitaillement de carburant en vol selon la revendication 1, dans lequel le système d'observation comprend une pluralité de dispositifs de détection (51a, 51b, 51c) répartis de manière radiale autour du tuyau à des fins d'observation du tuyau en provenance de différentes directions.

3. Système de ravitaillement de carburant en vol selon la revendication 1 ou la revendication 2, dans lequel chaque dispositif de détection (51a, 51b, 51c) est l'un des types suivants : une caméra infrarouge ; une caméra à ultraviolet ; une caméra à lumière visible ; une caméra hyperspectrale ; ou un système de capteur à profil laser 3D.

4. Système de ravitaillement de carburant en vol selon la revendication 3, dans lequel le système d'observation comprend une ou plusieurs paires de dispositifs de détection (51a, 51b, 51c) qui sont de différents types, dans lequel chaque paire de dispositifs de détection est agencée pour observer la même partie du tuyau.

5. Système de ravitaillement de carburant en vol selon la revendication 4, comportant par ailleurs un processeur de signaux agencé pour combiner des données fournies en provenance de chaque dispositif de ladite paire de dispositifs de détection (51a, 51b, 51c) pour produire des données hybrides.

6. Système de ravitaillement de carburant en vol selon l'une quelconque des revendications précédentes, dans lequel le système de déploiement de tuyau comporte par ailleurs un dispositif de rangement de tuyau (20) servant à ranger le tuyau quand il n'est pas déployé et un serveur de tuyau (22) ayant une ouverture (50, 60) au travers de laquelle le tuyau passe, le serveur de tuyau étant agencé à des fins de translation généralement dans le sens latéral par rapport à l'axe du tuyau pour diriger le tuyau (4) alors qu'il est reçu par le dispositif de rangement de tuyau (20), et dans lequel un ou plusieurs parmi lesdits un ou plusieurs dispositifs de détection (51a, 51b, 51c) sont agencés à des fins de montage sur le serveur de tuyau (22), lors de l'utilisation.

7. Système de ravitaillement de carburant en vol selon l'une quelconque des revendications précédentes, dans lequel le tuyau passe en provenance du système de déploiement de tuyau hors de l'aéronef par le biais d'un canal (3) qui s'étend jusqu'à la surface extérieure de l'aéronef, dans lequel un ou plusieurs parmi lesdits un ou plusieurs dispositifs de détection (51a, 51b, 51c) sont agencés à des fins de montage dans ledit canal (3).

8. Système de ravitaillement de carburant en vol selon l'une quelconque des revendications précédentes, dans lequel un ou plusieurs parmi lesdits un ou plusieurs dispositifs de détection (51a, 51b, 51c) sont agencés à des fins de montage sur une autre partie de l'aéronef pour observer le tuyau alors qu'il est déployé et rétracté en provenance de l'aéronef.

9. Système de ravitaillement de carburant en vol selon l'une quelconque des revendications précédentes, dans lequel le système de surveillance de tuyau comprend un processeur servant à analyser les données reçues en provenance des dispositifs de détection pour identifier des changements concernant l'état du tuyau.

10. Système de ravitaillement de carburant en vol selon la revendication 9, dans lequel le processeur compare les données reçues en provenance des dispositifs de détection par rapport à des données historiques en provenance des dispositifs de détection pour identifier des changements concernant l'état du tuyau.

11. Procédé de surveillance d'un tuyau (4) dans un système de ravitaillement de carburant en vol comportant les étapes consistant à :
déployer et rétracter un tuyau (4) dans et hors d'un aéronef ;
observer le tuyau en utilisant un ou plusieurs dispositifs de détection (51a, 51b, 51c) en mesure d'être montés sur l'aéronef et agencés pour observer le tuyau alors qu'il se déplace par rapport aux dispositifs de détection alors qu'il est déployé en provenance de, ou rétracté jusque dans, l'aéronef ; et
stocker les données fournies en provenance desdits un ou plusieurs dispositifs de détection dans un moyen de stockage de telle sorte que les données stockées peuvent être récupérées plus tard à des fins d'évaluation de la détérioration concernant l'état du tuyau.

12. Procédé de surveillance d'un tuyau selon la revendication 11, dans lequel l'étape consistant à observer comprend l'étape consistant à observer le tuyau en provenance de différentes directions en utilisant une pluralité desdits dispositifs de détection (51a, 51b, 51c) répartis de manière radiale autour du tuyau (4).
